# EUROPEAN PATENT APPLICATION

(11) **EP 2 098 771 A1**
(43) Date of publication of application: **09.09.2009**
(21) Application number: 09380010.0
(22) Date of filing: 27.01.2009
(51) Int. Cl.: F16L 15/08, F16L 19/00

(54) **A coupling device for conduits**

(30) Priority: 04.03.2008 ES 200800456
(71) Applicant: Cepex, S.A.U., 08400 Granollers, Barcelona (ES)
(72) Inventor: Rodríguez Rodríguez, Andrés, 08400 Granoller (ES); Barniol Suriñach, Jordi, 08400 Granoller (ES)
(74) Representative: Pastells Teixido, Manuel

(57) **Abstract**

A coupling device for conduits.

This device comprises a nut being rotatably retained at an end of the conduit (1). The device is **characterised in that** the retention of the nut (6) is accomplished with the presence of a ring (5) being partially nested in a peripheral slot (4) being provided in the vicinity of the open end (3) of the conduit (1), said ring having some resiliency. This ring (5) is open and has a rectangular cross-section, and the open end (3) of the conduit (1) has a surrounding slot (9) having an O-ring seal (8) fitted into it.

## Description

### OBJECT OF THE INVENTION

A coupling device for conduits.

### FIELD OF THE INVENTION

This coupling device is meant to be used for connecting two pipes being designed for the passage of fluids being mainly water.

### BACKGROUND OF THE INVENTION

For the coupling of two pipes several means are known ranging from the use of an adhesive up to the use of a nut. In this latter case the nut is advantageously fitted onto the pipe in an unlosable manner, the pipe being for such a purpose provided with a shoulder being fit to retain the nut. Complex operations are needed in order to provide the pipe with said shoulder, since this must be done after having fitted the nut onto the pipe and requires to treat the pipe material so as to be in a position to deform it and thus form the shoulder.

### SUMMARY OF THE INVENTION

It is the object of this invention to carry out the manufacture of a coupling device for conduits with unlosable nut thereby eliminating the complicated processes, the nut retaining stop being for such a purpose obtained by providing a ring that is to be fitted into a peripheral slot being provided on the pipe, said ring being somewhat resilient and open in order to thus facilitate its fitting into said slot.

This device comprises as well an O-ring seal that is partially housed in a socket being provided around the open end of the pipe receiving the nut.

These and other characterising features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Figs. 1 and 2 illustrate in a longitudinal half section the coupling device being fitted to a straight conduit and an angular conduit, respectively; and
Fig. 3 shows in a perspective view the ring making up the stop.

### DETAILED DESCRIPTION

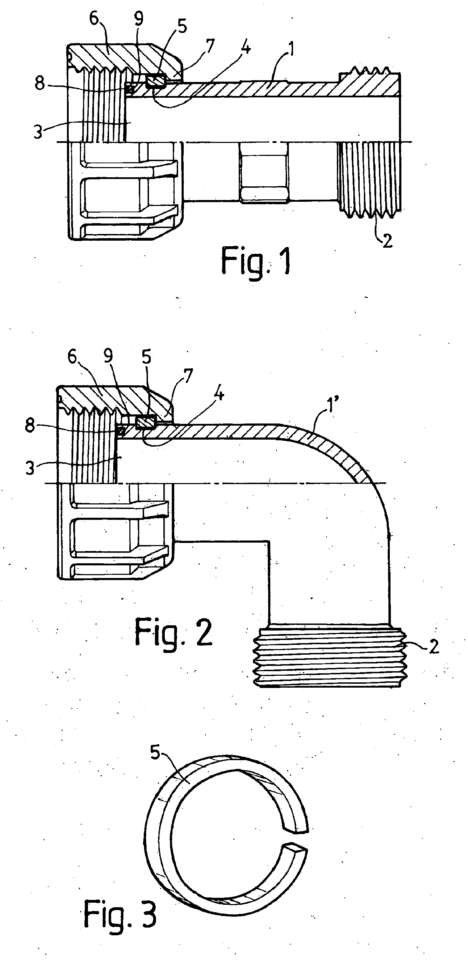

According to the drawings the conduit is made up by a rectilinear pipe (1) (Fig. 1) at one end having an external thread (2) and at the other end and next to the open end (3) being provided with a peripheral slot (4) being fit to house an open ring (5) having a rectangular cross-section (Fig. 3), said ring being somewhat resilient.

Before fitting said ring the nut (6) is fitted onto the pipe through said open end (3), said nut at its rearward open end having a peripheral shoulder (7) that will be in abutment with the ring (5), an unlosable nut (6) being thus obtained.

This coupling device is completed with an O-ring seal (8) being retained in a socket being formed by a slot (9) preferentially having a narrow open side and being provided at the open end (3) of the pipe.

It will be understood that this coupling device will also be fit to be used with conduits of other types besides the straight one (1) and the angular one (1'), such as for example with tee conduits.

## Claims

1. A coupling device for conduits which comprises a nut (6) being rotatably retained at an end of the conduit (1), **characterised in that** the retention of the nut (6) is accomplished with the presence of a ring (5) being partially nested in a peripheral slot (4) being provided in the vicinity of the open end (3) of the conduit (1).

2. A coupling device for conduits, as per claim 1, **characterised in that** the ring (5) has some resiliency and is an open ring.

3. A coupling device for conduits, as per claim 1, **characterised in that** the ring (5) has a rectangular cross-section.

4. A coupling device for conduits, as per claim 1, **characterised in that** the open end (3) of the conduit (1) has a surrounding slot (9) having an O-ring seal (8) fitted into it.
